# EUROPEAN PATENT APPLICATION

(11) **EP 4 528 458 A1**
(43) Date of publication of application: **26.03.2025**
(21) Application number: 23905738.3
(22) Date of filing: 08.12.2023
(51) Int. Cl.: G06F 3/04842, G06F 3/04883

(54) **INTERACTION METHOD AND APPARATUS, AND ELECTRONIC DEVICE AND STORAGE MEDIUM**

(30) Priority: 20.12.2022 CN 202211644034
(71) Applicant: Beijing Zitiao Network Technology Co., Ltd., Beijing 100190 (CN)
(72) Inventor: HE, Siqi, Beijing 100028 (CN); SHEN, Youjia, Beijing 100028 (CN)
(74) Representative: Williams, Michael David
(86) International application number: PCT/CN2023/137478
(87) International publication number: WO 2024/131571

(57) **Abstract**

Provided in the embodiments of the present disclosure are an interaction method and apparatus, and an electronic device and a storage medium. The method comprises: in response to a presentation operation of a first user for first media content, presenting a media content picture of the first media content on a preset page by using a first presentation style, wherein in the first presentation style, the media content picture comprises a picture in a fuzzy presentation state; and in response to a target interaction operation of the first user for a target object on the preset page, executing an interaction event corresponding to the target interaction operation, wherein the target object comprises the first media content or a target publisher, and the target publisher is a publisher of the first media content.

## Description

The present application claims priority and benefit to the Chinese patent application No. 202211644034.5 filed on December 20, 2022, the disclosure of which is incorporated herein by reference in its entirety as part of the present application.

### TECHNICAL FIELD

Embodiments of the present disclosure relate to a method for interaction, an apparatus, an electronic device, and a storage medium.

### BACKGROUND

In some applications, preset media contents may be presented in a blurring presentation state. However, when preset media contents are presented in the blurring presentation state, there are a limited number of modes of interaction for users.

### SUMMARY

Provided in the embodiments of the present disclosure are a method for interaction, an apparatus, an electronic device, and a storage medium, in order to enrich the mode of interaction when media contents are presented in a blurring presentation state.

Provided in the embodiment of the present disclosure is a method for interaction, including:
presenting, in response to a presentation operation of a first user for a first media content, a media content image of the first media content on a preset interface by using a first presentation style, in which in the first presentation style, the media content image includes an image in a blurring presentation state; and
executing, in response to a target interaction operation of the first user for a target object on the preset interface, an interaction event corresponding to the target interaction operation, in which the target object includes the first media content or a target poster, and the target poster is a poster of the first media content.

Also provided in the embodiment of the present disclosure is an apparatus for interaction, including:
a presentation module configured to present, in response to a presentation operation of a first user for a first media content, a media content image of the first media content on a preset interface by using a first presentation style, in which in the first presentation style, the media content image includes an image in a blurring presentation state; and
an interaction module configured to execute, in response to a target interaction operation of the first user for a target object on the preset interface, an interaction event corresponding to the target interaction operation, in which the target object includes the first media content or a target poster, and the target poster is a poster of the first media content.

Also provided in the embodiment of the present disclosure is an electronic device, including:
one or more processors; and
a memory for storing one or more programs,
the one or more programs, when executed by the one or more processors, causing the one or more processors to implement the method for interaction according to the embodiment of the present disclosure.

Also provided in the embodiment of the present disclosure is a computer-readable storage medium having a computer program stored thereon that, when executed by a processor, implements the method for interaction according to the embodiment of the present disclosure.

### BRIEF DESCRIPTION OF DRAWINGS

The above and other features, advantages and aspects of the embodiments of the present disclosure will become more apparent in conjunction with the accompanying drawings and with reference to the Detailed Description that follows. Throughout the drawings, identical or similar reference numbers indicate identical or similar elements. It shall be understood that the drawings are schematic and that the originals and elements are not necessarily drawn to scale.
FIG. 1 is a schematic flowchart of a method for interaction according to the embodiment of the present disclosure;
FIG. 2 is a schematic diagram showing a preset interface according to the embodiment of the present disclosure;
FIG. 3 is a schematic flowchart of another method for interaction according to the embodiment of the present disclosure;
FIG. 4 is a structural block diagram of an apparatus for interaction according to the embodiment of the present disclosure; and
FIG. 5 is a structural schematic diagram of an electronic device according to the embodiment of the present disclosure.

### DETAILED DESCRIPTION

The embodiments of the present disclosure will be described in more detail below with reference to the accompanying drawings. Although some embodiments of the present disclosure are shown in the drawings, it shall be understood that the present disclosure can be implemented in various forms and shall not be construed as being limited to the embodiments set forth herein. Rather, these embodiments are provided for a more thorough and complete understanding of the present disclosure. It shall be understood that the drawings and embodiments of the present disclosure are for exemplary purposes only and are not intended to limit the scope of the present disclosure.

It shall be understood that various steps stated in the method implementation of the present disclosure may be executed in different orders and/or in parallel. In addition, the method implementation may include additional steps and/or omit the steps shown during execution. In this regard, the scope of the present disclosure is not limited.

The term "include" and its variants as used herein are open inclusion, i.e., "including but not limited to". The term "based on" is "at least partially based on". The term "one embodiment" means "at least one embodiment"; the term "another embodiment" means "at least one additional embodiment"; and the term "some embodiments" means "at least some embodiments". The relevant definitions of other terms will be given in the following description.

It shall be noted that the concepts "first", "second", etc., mentioned in the present disclosure are only used to distinguish different apparatuses, modules or units, rather than defining the order or interdependence of functions performed by these apparatuses, modules or units.

It shall be noted that modifications "one" and "more" mentioned in the present disclosure are exemplary and nonlimiting. Those skilled in the art shall appreciate that such modifications shall be understood as "one or more", unless the context expressly indicates otherwise.

The names of messages or information exchanged among a plurality of apparatuses in the implementations of the present disclosure are for illustrative purposes only and are not intended to limit the scope of these messages or information.

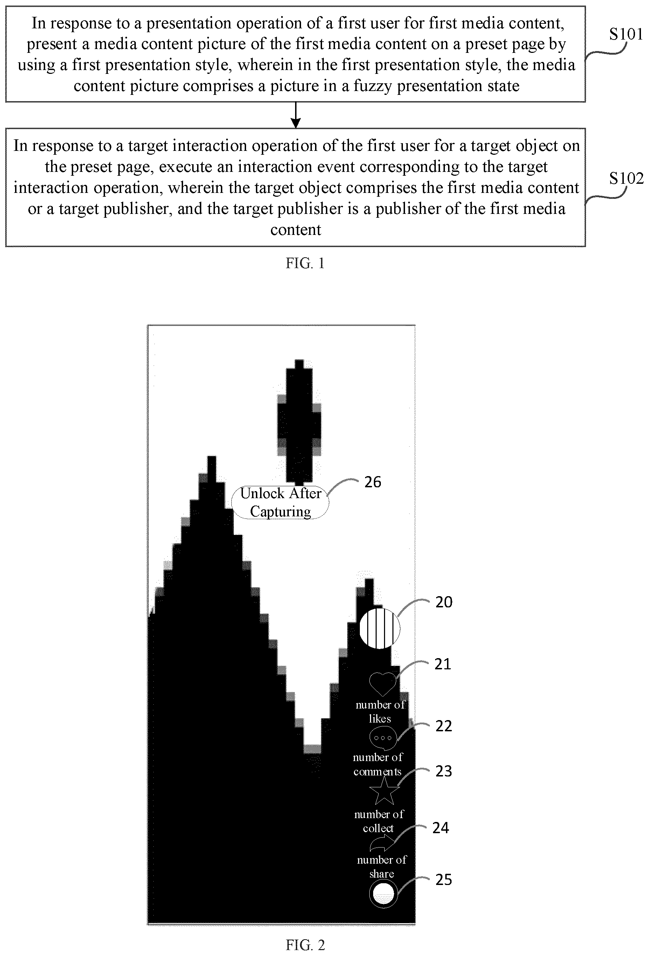

FIG. 1 is a schematic flowchart of a method for interaction according to the embodiment of the present disclosure. This method may be executed by an apparatus for interaction, in which this apparatus may be implemented in software and/or hardware and is configurable in an electronic device, e.g., configurable in a mobile phone or a tablet. The method for interaction according to the embodiment of the present disclosure is applicable to scenarios where interaction associated with a media content is carried out when the media content is in a blurring presentation state. As shown in FIG. 1, the method for interaction according to this embodiment may include:

S101: presenting, in response to a presentation operation of a first user for a first media content, a media content image of the first media content on a preset interface by using a first presentation style, in which in the first presentation style, the media content image includes an image in a blurring presentation state.

The presentation operation may be an operation for indicating presentation of a certain media content, such as a triggering operation for switching from other interfaces to a preset interface to present a media content on the preset interface, or a media content switching operation acting on the preset interface, etc.. The first media content may be a media content indicated to be presented by the presentation operation, and may be a preset media content, such as media content posted by a poster in a preset way. This preset media content, for example, may be videos, pictures, image-text content, etc., and the type of this preset media content is not defined in this embodiment. The first user may be a user executing this presentation operation, i.e., current user. The preset interface may be an interface for presenting the first media content, such as a media content presentation interface for presenting the preset media content, and this preset interface may or may not be used to present other media contents than the preset media content.

The first presentation style may be understood as a presentation style for the media content image, and in the first presentation style, the media content image includes an image in a blurring presentation state. Alternatively, the media content image including the image in the blurring presentation state is obtained by blurring of an original media content image of the first media content. For example, when the first presentation style needs to be used to present the first media content, a current application may perform blurring on the original media content image of the first media content either directly or via a server, such as adding mosaic to the original media content image during presentation to obtain the image in the blurring presentation state, in order to present the media content image including this image in the blurring presentation state. The original media content image may be understood as a media content image that is original to the first media content, i.e., an original image of the first media content posted by the target poster.

Specifically, upon reception of the presentation operation of the first user for the first media content, the first presentation style may be used to present the media content image of the first media content on the preset interface, such as presenting the image in the blurring presentation state, in the media content image of the first media content, as shown in FIG. 2.

In this embodiment, upon reception of the presentation operation of the first user for the first media content, in addition to use of the first presentation style to present the media content image of the first media content on the preset interface, one or more interaction controls associated with the first media content may be further presented such that the first user executes interaction operations associated with the first media content, such as executing a target interaction operation, etc.. In this case, alternatively, the method for interaction according to this embodiment further includes: presenting, in response to the presentation operation of the first user for the first media content, at least one interaction control associated with the first media content on the preset interface, in which at least part of the at least one interaction control is configured to execute the target interaction operation.

Exemplarily, as shown in FIG. 2, upon reception of the presentation operation of the first user for the first media content, a head portrait 20 of the target poster as well as controls of the first media content, such as a liking control 21, a comment control 22, a collection control 23, a sharing control 24, an audio control 25, etc., may be displayed on the preset interface. Thus, the first user may view the content of the personal interface of the target poster or establish a session with the target poster by triggering the head portrait 20 of the target poster; execute a liking operation by triggering the liking control 21 of the first media content, so as to give a like to the first media content; indicate, by triggering the comment control 22 of the first media content, the current application to display a comment panel for the first media content, so as to execute a comment posting operation for the first media content; indicate, by triggering the collection control 23 of the first media content, the current application to add the first media content into a media content collect list of the first user; indicate, by triggering the sharing control 24 of the first media content, the current application to display a sharing panel for the first media content, so as to execute a sharing operation for the first media content; and indicate, by triggering the audio control 25 of the first media content, the current application to display audio information of the first media content, such as indicating the current application to display the details of a background audio added into the first media content.

S102: executing, in response to a target interaction operation of the first user for a target object on the preset interface, an interaction event corresponding to the target interaction operation, in which the target object includes the first media content or a target poster, and the target poster is a poster of the first media content.

In this step, the target object may include the first media content or the target poster. This target poster may be considered as a poster of the first media content. The target interaction operation may be an operation of interacting with the target object, such as an operation of likes, commenting on or reposting the first media content, an operation of establishing a session with the target poster, etc.. This target interaction operation may act on the preset interface, and exemplarily, this target interaction operation may be a triggering operation that acts on corresponding interaction controls displayed in the preset interface, acts on corresponding gesture operations in the preset interface, etc..

Specifically, upon reception of the target interaction operation of the first user for the first media content in the preset interface or of the poster of the first media content, the interaction event corresponding to this target interaction operation may be executed.

In some implementations, the executing, in response to a target interaction operation of the first user for a target object on the preset interface, an interaction event corresponding to the target interaction operation includes at least one selected from the group of: updating a number of likes for the first media content in response to a liking operation of the first user for the first media content on the preset interface; posting comment information input by the first user, in response to a comment posting operation of the first user for the first media content on the preset interface; sharing the first media content in response to a sharing operation of the first user for the first media content on the preset interface; and sending session information to the target poster in response to a session information sending operation of the first user for the first target poster on the preset interface.

Among these operations, the liking operation may be a triggering operation for indicating likes to the first media content, such as an operation of triggering the liking control corresponding to the first media content. The comment posting operation may be a triggering operation for indicating posting of the comment information for the first media content, such as an operation of triggering a comment posting control, etc.. The sharing operation may be a triggering operation for indicating sharing of the first media content. The session information sending operation may be a triggering operation for indicating sending of the session information to the target poster.

In the above implementation, based on the target interaction operation executed by the first user in the preset interface, the interaction event corresponding to this target interaction operation may be executed.

Exemplarily, with continued reference to FIG. 2, upon reception of the liking operation of the first user for the first media content in the preset interface, such as upon detection of triggering, by the first user, of the liking control 21 of the first media content, the number of likes for the first media content may be updated, and the liking control 21 of the first media content may be further switched from a no-like state to a liked state or from the liked state to the no-like state.

Upon detection of triggering, by the first user, of the comment control 22 of the first media content, a comment panel for the first media content may be displayed such that the first user inputs his/her intended comment information. And upon reception of the comment posting operation of the first user for the first media content in the preset interface, such as upon detection of triggering, by the first user, of the comment posting control displayed in the comment panel, the comment information input by the first user is posted as the comment information of the first media content.

Upon detection of triggering, by the first user, of the sharing control 24 of the first media content, a sharing panel for the first media content may be displayed such that the first user selects an object with which the first media content is shared. And upon reception of the sharing operation of the first user for the first media content in the preset interface, such as upon detection of triggering, by the first user, of a determining control in the sharing panel, the first media content is shared, such as the first media content is shared in the form of session information or the first media content is shared to the personal interface of the first user or other applications, etc..

Upon detection of triggering, by the first user, of the head portrait 20 of the target poster, the interface content of the personal interface of the target poster and a session control may be displayed; or, when the media content image of the first media content is presented using the first presentation style, the session control may be further displayed in the preset interface (not shown in FIG. 2). Thus, upon detection of triggering of this session control by the first user, a session information input area may be displayed such that in this session information input area, the first user inputs preset session information or other session information he/she intends to send, and upon reception of the session information sending operation of the first user for the target poster in the preset interface, such as upon detection of triggering of a session information sending control by the first user, session information that is input by the first user in this session information input area is sent to the target poster.

According to the method for interaction provided in this embodiment, in response to a presentation operation of a first user for a first media content, a media content image of the first media content is presented on a preset interface by using a first presentation style, in which in the first presentation style, the media content image of the first media content includes an image in a blurring presentation state; and in response to a target interaction operation of the first user for a target object in the preset interface, an interaction event corresponding to the target interaction operation is executed, in which the target object includes the first media content or a target poster, and the target poster is a poster of the first media content. With the above technical solution employed in this embodiment, during presentation of the media content image including the image in the blurring presentation state, users are supported to interact with the first media content or the poster of the first media content by executing the interaction operation, which can enrich the mode of interaction when media contents are presented in the blurring presentation state.

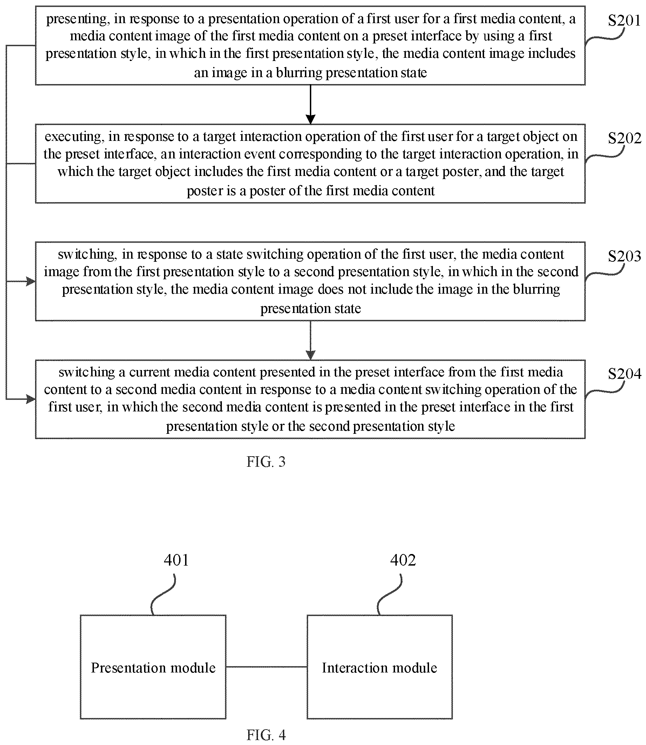

FIG. 3 is a schematic flowchart of another method for interaction according to the embodiment of the present disclosure. The solution in this embodiment may be combined with one or more alternative solutions in the above embodiments.

Alternatively, the method for interaction according to this embodiment further includes: switching, in response to a state switching operation of the first user, the media content image from the first presentation style to a second presentation style, in which in the second presentation style, the media content image does not include the image in the blurring presentation state.

Alternatively, the method for interaction according to this embodiment further includes: switching a current media content presented in the preset interface from the first media content to a second media content in response to a media content switching operation of the first user, in which the second media content is presented in the preset interface in the first presentation style or the second presentation style.

Accordingly, as shown in FIG. 3, the method for interaction according to this embodiment may include:
S201: presenting, in response to a presentation operation of a first user for a first media content, a media content image of the first media content on a preset interface by using a first presentation style, and executing at least one selected from the group of S202, S203 or S204, in which in the first presentation style, the media content image includes an image in a blurring presentation state.
S202: executing, in response to a target interaction operation of the first user for a target object on the preset interface, an interaction event corresponding to the target interaction operation, and executing S203 or S204, in which the target object includes the first media content or a target poster, and the target poster is a poster of the first media content.
S203: switching, in response to a state switching operation of the first user, the media content image from the first presentation style to a second presentation style, in which in the second presentation style, the media content image does not include the image in the blurring presentation state.

The state switching operation may be a triggering operation for indicating switching of the image in the blurring presentation state that the media content image of the first media content includes, to a non-blurring presentation state, i.e., a triggering operation for indicating switching of the media content image of the first media content from the first presentation style to the second presentation style. Alternatively, the state switching operation includes at least one selected from the group of the target interaction operation, a relationship establishing operation executed for a n-th time subsequent to the presentation operation, and a preset media content posting operation, in which the relationship establishing operation is configured to indicate that a preset association relationship with a target second user is established for the first user, the target second user is a second user corresponding to the relationship establishing operation, and n is a positive integer.

The second presentation style may be a presentation style different from the first presentation style, and in the second presentation style, the media content image does not include the image in the blurring presentation state, i.e., the media content image is always presented in the non-blurring presentation state. In another words, in the second presentation style, the media content image is an image that is clearly presented, such as an original media content image of the first media content. The relationship establishing operation may be a triggering operation for indicating that a current application establishes, for the first user, a preset association relationship between the first user and the target second user. This preset association relationship, for example, may be a following relationship, in which case this relationship establishing operation may be a triggering operation of the first user for indicating following the target second user. The target second user may be a second user corresponding to this relationship establishing operation. This second user may be a user different from the first user, e.g., the second user may be a user who has not yet established the preset association relationship with the first user. The preset media content posting operation may be a triggering operation for indicting posting of a preset media content.

In this embodiment, when a media content is presented in the first presentation style, the first user may switch the media content (such as the first media content, the second media content, etc.) presented in the first presentation style from the first presentation style to the second presentation style by executing the state switching operation, such as switching the image in the blurring presentation state in the media content image of the first media content to the non-blurring presentation state, such that the media content image of this media content can be viewed in a non-blurring state.

For example, the first user may execute the target interaction operation for the target object when intending to view the media content image of this media content in the non-blurring state, such as likes, commenting on or sharing the first media content, or sending session information to the poster of the first media content, etc.. Accordingly, upon detection of execution, by the first user, of the target interaction operation, the current application may switch the media content image of the first media content from the first presentation style to the second presentation style.

For another example, the first user may execute the relationship establishing operation n times when intending to view the media content image of this media content in the non-blurring state, such as establishing the preset association relationship with n second users who have not yet established the preset association relationship. Accordingly, upon detection of execution, by the first user, of the relationship establishing operation for the n-th time, such as upon determination that the first user newly establishes the preset association relationship with n second users, the current application may switch the media content image of the first media content from the first presentation style to the second presentation style, in which n may be flexibly set as required, e.g., n may be set as 1, 2, or 5, etc..

For yet another example, the first user may execute the preset media content posting operation when intending to view the media content image of this media content in the non-blurring state, such as entering a capturing interface by triggering a capturing control 26 (as shown in FIG. 2) displayed in the preset interface, capturing a media content in the capturing interface, and posting this media content as a preset media content. Accordingly, upon detection of execution, by the first user, of the preset media content operation, such as after the preset media content is posted by the first user, the current application may present the media content image of the first media content in the second presentation style.

In some implementations, after the presenting a media content image of the first media content on a preset interface by using a first presentation style, the following step is further included: displaying a target user list in response to a list display operation of the first user, user information and a relationship establishing control of at least one second user are presented in the target user list, and the relationship establishing control is configured to trigger execution of the relationship establishing operation.

In this step, the list display operation may be a triggering operation for indicating display of the target user list, such as a triggering operation that triggers a preset control (not shown in FIG. 2) displayed in the preset interface, etc.. The relationship establishing control may be a control for triggering execution of the relationship establishing operation.

Exemplarily, when intending to switch the image in the blurring presentation state in the media content image of the first media content to the non-blurring presentation state by executing the relationship establishing operation, the first user may execute the list display operation, such as triggering the preset control displayed in the preset interface.

Upon detection of execution, by the first user, of the list display operation, the current application may display the target user list in the preset interface, and present, in this target user list, the user information and at least one relationship establishing control of at least one second user, such as displaying the user information of at least one second user as well as the relationship establishing control corresponding to each second user.

Thus, the first user may execute a preset relationship establishing operation by triggering the relationship establishing control corresponding to a certain second user.

Accordingly, upon detection of triggering, by the first user, of the relationship establishing control corresponding to a certain second user (i.e., the target second user), the current application may establish, for the first user, the preset association relationship between the first user and this second user, such as adding this second user into a user list (such as a following list of the first user) having the preset association relationship with the first user.

S204: switching a current media content presented in the preset interface from the first media content to a second media content in response to a media content switching operation of the first user, in which the second media content is presented in the preset interface in the first presentation style or the second presentation style.

In this step, the media content switching operation may be a triggering operation for indicating switching of the current media content presented in the preset interface, such as an operation of sliding along a preset direction in the preset interface, etc.. The preset direction, for example, may be a vertical direction or a horizontal direction, etc., and this is not limited in this embodiment. The second media content may be a media content different from the first media content, and may be a preset media content having the first presentation style or the second presentation style, or a common media content having only the second presentation style.

In this embodiment, upon reception of the media content switching operation of the first user, the current media content presented in the preset interface may be switched from the first media content to the second media content, such as presenting the second media content in the preset interface by using the first presentation style or the second presentation style, and specific details may be flexibly set as required.

Exemplarily, when the first user already has the permission to view the media content images of various preset media contents in the non-blurring state, then in this case, the second media content may still be presented by using the second presentation style even though the second media content is the preset media content; and when the first user has no permission to view the media content images of various preset media contents in the non-blurring state, then when the second media content is the preset media content, this second media content may be presented by reusing the first presentation style.

It can be understood that when this second media content is presented by using the first presentation style, the first user may also equally switch the second media content from the first presentation style to the second presentation style by executing the state switching operation.

In addition, when the second media content is not the preset media content, e.g., when the second media content is a common media content other than the preset media content, then this second media content may be presented by using the second presentation style.

According to the method for interaction provided in this embodiment, the media content image of the first media content is switched from the first presentation style to the second presentation style when the state switching operation of a user is received, and upon reception of the media content switching operation of the user, the switched second media content is presented by using the first presentation style or the second presentation style. In this way, the presentation style of the switched media content and the way of switching the presentation style may be further enriched.

FIG. 4 is a structural block diagram of an apparatus for interaction according to the embodiment of the present disclosure. This apparatus may be implemented in software and/or hardware and is configurable in an electronic device, e.g., configurable in a mobile phone or a tablet. By executing the method for interaction, an interaction event associated with a media content may be executed when the media content is in a blurring presentation state. As shown in FIG. 4, the apparatus for interaction according to this embodiment may include: a presentation module 401 and an interaction module 402.

The presentation module 401 is configured to present, in response to a presentation operation of a first user for a first media content, a media content image of the first media content on a preset interface by using a first presentation style, in which in the first presentation style, the media content image includes an image in a blurring presentation state.

The interaction module 402 is configured to execute, in response to a target interaction operation of the first user for a target object on the preset interface, an interaction event corresponding to the target interaction operation, in which the target object includes the first media content or a target poster, and the target poster is a poster of the first media content.

The apparatus for interaction according to this embodiment presents, through the presentation module and in response to the presentation operation of the first user for the first media content, the media content image of the first media content on the preset interface by using the first presentation style, in which in the first presentation style, the media content image of the first media content includes the image in the blurring presentation state; and execute, through the interaction module and in response to the target interaction operation of the first user for the target object on the preset interface, the interaction event corresponding to the target interaction operation, in which the target object includes the first media content or the target poster, and the target poster is the poster of the first media content. With the above technical solution employed in this embodiment, during presentation of the media content image including the image in the blurring presentation state, users are supported to interact with the first media content or the poster of the first media content by executing the interaction operation, which can enrich the mode of interaction when media contents are presented in the blurring presentation state.

In the above solution, the presentation module 401 may be further configured to: present, in response to the presentation operation of the first user for the first media content, at least one interaction control associated with the first media content on the preset interface, in which at least part of the at least one interaction control is configured to execute the target interaction operation.

Further, the apparatus for interaction according to this embodiment may further include: a state switching module configured to switch, in response to a state switching operation of the first user, the media content image from the first presentation style to a second presentation style, in which in the second presentation style, the media content image does not include the image in the blurring presentation state.

In the above solution, the state switching operation may include at least one selected from the group of the target interaction operation, a relationship establishing operation executed for the n-th time subsequent to the presentation operation, and a preset media content posting operation, in which the relationship establishing operation may be configured to indicate that a preset association relationship with a target second user is established for the first user, the target second user is a second user corresponding to the relationship establishing operation, and n is a positive integer.

Further, the apparatus for interaction according to this embodiment may further include: a list display module configured to: after the presenting a media content image of the first media content on a preset interface by using a first presentation style, display a target user list in response to a list display operation of the first user, user information and a relationship establishing control of at least one second user are presented in the target user list, and the relationship establishing control is configured to trigger execution of the relationship establishing operation.

In the above solution, the interaction module 402 may be configured to execute at least one selected from the group of: updating a number of likes for the first media content in response to a liking operation of the first user for the first media content on the preset interface; posting comment information corresponding to the first media content, in response to a comment posting operation of the first user for the first media content on the preset interface; sharing the first media content in response to a sharing operation of the first user for the first media content on the preset interface; and sending session information to the target poster in response to a session information sending operation of the first user for the first target poster on the preset interface.

Further, the apparatus for interaction according to this embodiment may further include: a media content switching module configured to switch a current media content presented in the preset interface from the first media content to a second media content in response to a media content switching operation of the first user, in which the second media content is presented in the preset interface in the first presentation style or the second presentation style.

In the above solution, the media content image including the image in the blurring presentation state may be obtained by blurring of an original media content image of the first media content.

The apparatus for interaction according to the embodiment of the present disclosure may execute the method for interaction according to any embodiment of the present disclosure, and has functional modules and advantageous effects that correspond to execution of the method for interaction. For technical details not described in detail in this embodiment, reference may be made to the method for interaction according to any embodiment of the present disclosure.

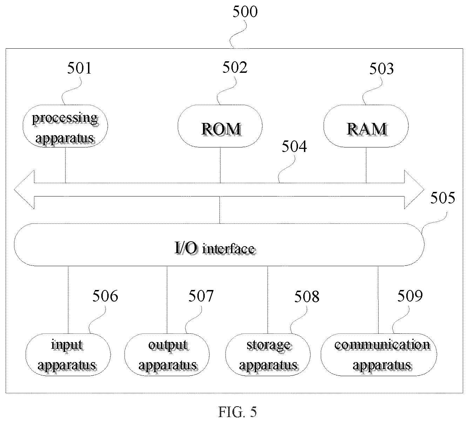

Hereinafter, reference is made to FIG. 5 that shows a structural schematic diagram of an electronic device (e.g., a terminal device) 500 suited to implementation of the embodiments of the present disclosure. The terminal devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal) or the like, and fixed terminals such as a digital TV, a desktop computer, or the like. The electronic device illustrated in FIG. 5 is merely an example, and should not pose any limitation to the functions and the range of use of the embodiments of the present disclosure.

As illustrated in FIG. 5, the electronic device 500 may include a processing apparatus 501 (e.g., a central processing unit, a graphics processing unit, etc.), which can perform various suitable actions and processing according to a program stored in a read-only memory (ROM) 502 or a program loaded from a storage apparatus 508 into a random-access memory (RAM) 503. The RAM 503 further stores various programs and data required for operations of the electronic device 500. The processing apparatus 501, the ROM 502, and the RAM 503 are interconnected by means of a bus 504. An input/output (I/O) interface 505 is also connected to the bus 504. An input/output (I/O) interface 505 is also connected to a bus 504.

Usually, the following apparatus may be connected to the I/O interface 505: an input apparatus 506 including, for example, a touch screen, a touch pad, a keyboard, a mouse, a camera, a microphone, an accelerometer, a gyroscope, or the like; an output apparatus 507 including, for example, a liquid crystal display (LCD), a loudspeaker, a vibrator, or the like; a storage apparatus 508 including, for example, a magnetic tape, a hard disk, or the like; and a communication apparatus 509. The communication apparatus 509 may allow the electronic device 500 to be in wireless or wired communication with other devices to exchange data. While FIG. 5 illustrates the electronic device 500 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 509 and installed, or may be installed from the storage apparatus 508, or may be installed from the ROM 502. When the computer program is executed by the processing apparatus 501, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs that, when executed by the electronic device, causes the electronic device to: present, in response to a presentation operation of a first user for a first media content, a media content image of the first media content on a preset interface by using a first presentation style, in which in the first presentation style, the media content image includes an image in a blurring presentation state; and execute, in response to a target interaction operation of the first user for a target object on the preset interface, an interaction event corresponding to the target interaction operation, in which the target object includes the first media content or a target poster, and the target poster is a poster of the first media content.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc..

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, provided in Example 1 is a method for interaction that includes:
presenting, in response to a presentation operation of a first user for a first media content, a media content image of the first media content on a preset interface by using a first presentation style, in which in the first presentation style, the media content image includes an image in a blurring presentation state; and
executing, in response to a target interaction operation of the first user for a target object on the preset interface, an interaction event corresponding to the target interaction operation, in which the target object includes the first media content or a target poster, and the target poster is a poster of the first media content.

According to one or more embodiments of the present disclosure, the method of Example 2 according to Example 1 further includes:
presenting, in response to the presentation operation of the first user for the first media content, at least one interaction control associated with the first media content on the preset interface, in which at least part of the at least one interaction control is configured to execute the target interaction operation.

According to one or more embodiments of the present disclosure, the method of Example 3 according to Example 1 further includes:
switching, in response to a state switching operation of the first user, the media content image from the first presentation style to a second presentation style, in which in the second presentation style, the media content image does not include the image in the blurring presentation state.

According to one or more embodiments of the present disclosure, in the method of Example 4 according to Example 3, the state switching operation includes at least one selected from the group of the target interaction operation, a relationship establishing operation executed for a n-th time subsequent to the presentation operation, and a preset media content posting operation, in which the relationship establishing operation is configured to indicate that a preset association relationship with a target second user is established for the first user, the target second user is a second user corresponding to the relationship establishing operation, and n is a positive integer.

According to one or more embodiments of the present disclosure, the method of Example 5 according to Example 4, after the presenting a media content image of the first media content on a preset interface by using a first presentation style, further includes:
displaying a target user list in response to a list display operation of the first user, user information and a relationship establishing control of at least one second user being presented in the target user list, and the relationship establishing control being used to trigger execution of the relationship establishing operation.

According to one or more embodiments of the present disclosure, in the method of Example 6 according to any of Examples 1 to 5, the executing, in response to a target interaction operation of the first user for a target object on the preset interface, an interaction event corresponding to the target interaction operation includes at least one selected from the group of:
updating a number of likes for the first media content in response to a liking operation of the first user for the first media content on the preset interface;
posting comment information corresponding to the first media content in response to a comment posting operation of the first user for the first media content on the preset interface;
sharing the first media content in response to a sharing operation of the first user for the first media content on the preset interface; and
sending session information to the target poster in response to a session information posting operation of the first user for the target poster on the preset interface.

According to one or more embodiments of the present disclosure, the method of Example 7 according to any of Examples 1 to 5 further includes:
switching a current media content presented in the preset interface from the first media content to a second media content in response to a media content switching operation of the first user, in which the second media content is presented in the preset interface in the first presentation style or the second presentation style.

According to one or more embodiments of the present disclosure, in the method of Example 8 according to any of Examples 1 to 5, the media content image including the image in the blurring presentation state is obtained by blurring of an original media content image of the first media content.

According to one or more embodiments of the present disclosure, provided in Example 9 is an apparatus for interaction that includes:
a presentation module configured to present, in response to a presentation operation of a first user for a first media content, a media content image of the first media content on a preset interface by using a first presentation style, in which in the first presentation style, the media content image includes an image in a blurring presentation state; and
an interaction module configured to execute, in response to a target interaction operation of the first user for a target object on the preset interface, an interaction event corresponding to the target interaction operation, in which the target object includes the first media content or a target poster, and the target poster is a poster of the first media content.

According to one or more embodiments of the present disclosure, provided in Example 10 is an electronic device that includes:
one or more processors; and
a memory for storing one or more programs,
the one or more programs, when executed by the one or more processors, cause the one or more processors to implement the method for interaction according to any of Examples 1 to 8.

According to one or more embodiments of the present disclosure, provided in Example 11 is a computer-readable storage medium having a computer program stored thereon that, when executed by a processor, implements the method for interaction according to any of Examples 1 to 8.

The description above is merely the preferred embodiments of the present disclosure and a description of the technical principle employed. Those skilled in the art should appreciate that the scope of disclosure involved in the present disclosure is not limited to technical solutions formed by specific combinations of the above technical features, and shall also cover other technical solutions that are formed by any combination of the above technical features or their equivalent features without departing from the above disclosed concepts, e.g., a technical solution formed by interchanging the above features with technical features having similar functions (but not limited to) disclosed in the present disclosure.

In addition, while operations are depicted in a specific order, this shall not be understood as requiring these operations to be performed in the shown specific order or in a sequential order. Under certain circumstances, multitask and parallel processing may be beneficial. Similarly, although a number of specific implementation details are included in the above discussion, these details shall not be construed as limiting the scope of the present disclosure. Some features described in the context of individual embodiments may also be implemented in combination in a single embodiment. Conversely, various features described in the context of a single embodiment may also be implemented in multiple embodiments either alone or in any suitable sub-combination.

Although the subject matter has been described in a language specific to structural features and/or method logic actions, it shall be understood that the subject matter defined in the attached claims is not necessarily limited to the specific features or actions described above. Rather, the specific features and actions described above are only exemplary forms of realizing the claims.

## Claims

1. A method for interaction, comprising:
presenting, in response to a presentation operation for a first media content, a media content image of the first media content on a preset interface by using a first presentation style, wherein in the first presentation style, the media content image comprises an image in a blurring presentation state; and
executing, in response to a target interaction operation for a target object on the preset interface, an interaction event corresponding to the target interaction operation, wherein the target object comprises the first media content or a target poster, and the target poster is a poster of the first media content.

2. The method according to claim 1, further comprising:
presenting, in response to the presentation operation for the first media content, at least one interaction control associated with the first media content on the preset interface, wherein at least part of the at least one interaction control is configured to execute the target interaction operation.

3. The method according to claim 1 or 2, further comprising:
switching, in response to a state switching operation, the media content image from the first presentation style to a second presentation style, wherein in the second presentation style, the media content image does not comprise the image in the blurring presentation state.

4. The method according to claim 3, wherein the state switching operation comprises at least one selected from the group of the target interaction operation, a relationship establishing operation executed for a n-th time subsequent to the presentation operation, and a preset media content posting operation, wherein the relationship establishing operation is configured to indicate that a preset association relationship with a target second user is established for a first user currently executing the method for interaction, the target second user is a second user corresponding to the relationship establishing operation, and n is a positive integer.

5. The method according to claim 4, wherein the method, after the presenting a media content image of the first media content on a preset interface by using a first presentation style, further comprises:
displaying a target user list in response to a list display operation, wherein user information and a relationship establishing control of at least one second user are presented in the target user list, and the relationship establishing control is configured to trigger execution of the relationship establishing operation.

6. The method according to any of claims 1 to 5, wherein the executing, in response to a target interaction operation for a target object on the preset interface, an interaction event corresponding to the target interaction operation comprises at least one selected from the group of:
updating a number of likes for the first media content in response to a liking operation for the first media content on the preset interface;
posting comment information corresponding to the first media content in response to a comment posting operation for the first media content on the preset interface;
sharing the first media content in response to a sharing operation for the first media content on the preset interface; and
sending session information to the target poster in response to a session information posting operation for the target poster on the preset interface.

7. The method according to any of claims 1 to 6, further comprising:
switching a current media content presented in the preset interface from the first media content to a second media content in response to a media content switching operation, wherein the second media content is presented in the preset interface in the first presentation style or a second presentation style.

8. The method according to any of claims 1 to 7, wherein the media content image comprising the image in the blurring presentation state is obtained by blurring an original media content image of the first media content.

9. An apparatus for interaction, comprising:
a presentation module, configured to present, in response to a presentation operation for a first media content, a media content image of the first media content on a preset interface by using a first presentation style, wherein in the first presentation style, the media content image comprises an image in a blurring presentation state; and
an interaction module, configured to execute, in response to a target interaction operation for a target object on the preset interface, an interaction event corresponding to the target interaction operation, wherein the target object comprises the first media content or a target poster, and the target poster is a poster of the first media content.

10. An electronic device, comprising:
at least one processor; and
a memory communicatively connected with the at least one processor;
wherein a computer program executable by the at least one processor is stored in the memory, and the computer program, when executed by the at least one processor, causes the at least one processor to execute the method for interaction according to any of claims 1 to 8.

11. A computer-readable storage medium having computer instructions stored that, when executed by a processor, implement the method for interaction according to any of claims 1 to 8.
